Europäisches Patentamt

European Patent Office

Office européen des brevets

(19)

(11) **EP 1 108 946 A1**

(12) **DEMANDE DE BREVET EUROPEEN**

(43) Date de publication:
**20.06.2001 Bulletin 2001/25**

(51) Int Cl.[7]: **F17C 1/00**

(21) Numéro de dépôt: **00403513.5**

(22) Date de dépôt: **14.12.2000**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **17.12.1999 FR 9915957**

(71) Demandeur: **Snecma Moteurs**
**75015 Paris (FR)**

(72) Inventeur: **Garceau, Patrick**
**27950 Saint Pierre d'Autils (FR)**

(74) Mandataire: **David, Alain et al**
**Cabinet Beau de Loménie**
**158, rue de l'Université**
**75340 Paris Cedex 07 (FR)**

(54) **Réservoir pour stockage de gaz à haute pression**

(57) Le réservoir (1) pour stockage de gaz à haute pression, tel qu'un réservoir pour véhicule fonctionnant au gaz, comprend un volume de confinement (2) accessible par des moyens de raccordement (4, 5) et qui est défini par un conduit (3) disposé selon un enroulement en spirale de sorte que les parties principales sensiblement rectilignes (10, 11) du conduit soient en appui l'une contre l'autre. Les efforts exercés par la pression du gaz sur les parties principales d'une spire du conduit (3) sont alors compensés par les efforts exercés sur les spires adjacentes du conduit (3).

FIG.1

EP 1 108 946 A1

## Description

### DOMAINE DE L'INVENTION

La présente invention concerne un réservoir pour stockage de gaz à haute pression comprenant un volume de confinement en communication sélective avec l'extérieur par des moyens de raccordement. Plus particulièrement, l'invention concerne des réservoirs légers et compacts destinés au stockage de gaz à haute pression pour des applications sur véhicules terrestres non polluants (GNV, GH2, GPL...) ou encore sur des aéronefs.

### ART ANTERIEUR

Les réservoirs de stockage de gaz à haute pression conventionnels sont connus pour présenter le plus souvent des formes de bouteilles cylindriques ou de sphères. Ces types de réservoirs utilisés à l'unité ou en "rack" occupent un volume important du fait de leur géométrie ainsi que de la présence, en saillie, des moyens de raccordement et des protections réglementaires requises (choc, feu ...). En effet, des combinaisons de bouteilles, qui permettent de réduire une des dimensions du stockage, par exemple la hauteur, se traduisent inévitablement par des ensembles de stockage lourds et coûteux qui présentent un encombrement accru au niveau de leurs dimensions non réduites. Dans les meilleurs agencements connus de l'art antérieur, le volume dédié au stockage du gaz n'excède pas 40% du volume hors tout pour un indice de structure maximum de 1,5 l/kg.

### OBJET ET DESCRIPTION SUCCINCTE DE L'INVENTION

La présente invention vise à remédier aux inconvénients précités de l'art antérieur et en particulier à réaliser un réservoir pour stockage de gaz à haute pression qui présente un encombrement et une masse réduits pour un volume de stockage équivalent à celui d'un réservoir conventionnel tout en garantissant les conditions de protection requises de l'art antérieur.

Ces buts sont atteints grâce à un réservoir pour stockage de gaz à haute pression comprenant un volume de confinement en communication sélective avec l'extérieur par des moyens de raccordement, caractérisé en ce que le volume de confinement comprend un conduit présentant une section oblongue formée d'une première et d'une deuxième portions allongées raccordées entre elles par des troisième et quatrième portions curvilignes et en ce que le conduit est disposé en une pluralité de parties jointives de manière à permettre un appui d'au moins une des portions allongées d'une partie jointive sur une des portions allongées correspondante d'une partie jointive adjacente.

Ainsi, l'invention propose un réservoir pour stocker du gaz à haute pression qui permet de réduire significativement la masse et l'encombrement en comparaison avec les réservoirs de l'art antérieur pour un volume de stockage donné. De plus, le réservoir selon l'invention présente une conception qui, non seulement, optimise en masse et en encombrement le réservoir mais garantit aussi les exigences en sécurité requises pour ce type de stockage.

Le conduit peut présenter une section de dimensions variables.

De façon particulière, les troisième et quatrième portions curvilignes sont des demi-cercles.

Plus spécialement, les portions allongées sont sensiblement rectilignes.

Selon un mode de réalisation de l'invention, le réservoir est formé de telle manière que le conduit est disposé selon un enroulement en spirale autour d'un axe ZZ' à partir d'une extrémité interne du conduit comportant les moyens de raccordement jusqu'à une extrémité externe fermée de fin du conduit.

De cette façon, les moyens de raccordement du réservoir ne sont plus en saillie réduisant ainsi l'encombrement total de ce dernier.

Le réservoir peut présenter une forme de galette, une forme ovale ou encore une forme rectangulaire.

Selon un aspect particulier de l'invention, le réservoir définit des parois frontales sensiblement planes et parallèles.

Alternativement, le réservoir définit au moins une paroi frontale sensiblement tronconique.

Selon une caractéristique particulière de l'invention, une surface interne du réservoir définie par l'enroulement du conduit comprend une frette intérieure.

La spire la plus intérieure de l'enroulement ne pouvant pas bénéficier sur sa face interne d'une compensation d'effort en pression du gaz par une spire adjacente se trouve renforcée par un frettage intérieur.

Selon une autre caractéristique de l'invention, une surface externe du réservoir définie par l'enroulement du conduit comprend une frette extérieure.

La spire la plus extérieure de l'enroulement ne pouvant pas bénéficier sur sa face externe d'une compensation d'effort en pression du gaz par une spire adjacente se trouve renforcée par un frettage extérieur.

L'optimisation de conception d'un réservoir selon l'invention peut également être réalisée par une disposition en enroulement de type hélicoïdal.

Ainsi, selon un mode de réalisation de l'invention, le réservoir est formé de telle manière que le conduit est disposé selon un enroulement hélicoïdal autour d'un axe ZZ' à partir d'une première extrémité fermée jusqu'à une seconde extrémité comportant les moyens de raccordement.

L'optimisation de conception d'un réservoir selon l'invention peut aussi être obtenue par une disposition du conduit en serpentin qui permet en particulier de réaliser un réservoir de forme parallélépipédique.

Ainsi, selon un autre mode de réalisation de l'invention, le réservoir est formé par un conduit disposé selon un serpentin en lacets à partir d'une première extrémité comportant les moyens de raccordement jusqu'à une seconde extrémité qui peut être fermée ou qui peut comprendre également des moyens de raccordement.

Selon un aspect particulier, le réservoir présente des parties coudées dans lesquelles il est pratiqué au moins un cordon de soudure.

Le réservoir peut également comprendre un bobinage qui entoure toute la surface latérale du serpentin formé par le conduit.

La présente invention a également pour objet un procédé de fabrication d'un réservoir pour stockage de gaz à haute pression, caractérisé en ce qu'il comprend les étapes de cintrage d'un conduit de section oblongue en une pluralité de parties jointives de manière à permettre à au moins une portion allongée d'une partie jointive du conduit d'être en appui sur une portion allongée d'une partie jointive adjacente, de traitement thermique du conduit provisoirement cerclé, et de bobinage de la surface externe du conduit au moyen d'une fibre de carbone ou de verre.

L'invention propose donc un mode de fabrication d'un réservoir qui permet d'obtenir un réservoir au moins aussi fiable sur le plan de la sécurité que ceux connus de l'art antérieur et qui réalise un gain de masse et d'encombrement significatif.

Selon un aspect de l'invention, le procédé comprend en outre une étape de fermeture d'une première extrémité du conduit et une étape de fixation de moyens de communication sur une seconde extrémité du conduit.

Selon une caractéristique particulière, le procédé comprend une étape de formation du conduit à section oblongue au moyen d'une bande métallique refermée par soudage axial.

Selon un autre aspect de l'invention, l'opération d'enroulement du conduit comprend en outre l'application d'une pression intérieure au conduit et/ou d'un préchauffage du conduit.

Selon un mode de réalisation de l'invention, l'étape de cintrage correspond à un enroulement du conduit autour d'un axe ZZ' et le procédé de fabrication comprend, en outre, une étape d'introduction d'une frette intérieure sur la surface interne définie par l'enroulement.

Selon un autre mode de réalisation de l'invention, l'étape de cintrage correspond à un pliage en serpentin du conduit et le procédé de fabrication comprend, en outre, une étape de soudage dans des parties coudées du conduit disposé en serpentin.

De façon particulière, le procédé selon l'invention comprend, en outre, une étape de serrage du bobinage externe.

Avantageusement, le procédé comprend, en outre, une étape de bobinage du réservoir au moyen d'une fibre de verre.

## BREVE DESCRIPTION DES DESSINS

D'autres caractéristiques et avantages de l'invention ressortiront de la description suivante de modes particuliers de réalisation de l'invention, donnés à titre d'exemples non limitatifs, en référence aux dessins annexés, sur lesquels :

la figure 1 est une vue en perspective en coupe partielle d'un réservoir conformément à un premier mode de réalisation selon la présente invention,
la figure 2 est une vue en coupe d'une spire d'un réservoir montrant la section d'un conduit selon l'invention,
la figure 3 est une vue partielle en perspective montrant une extrémité d'un enroulement du réservoir de la figure 1,
la figure 4 est une vue partielle en perspective montrant une autre extrémité d'un enroulement du réservoir de la figure 1,
la figure 5 est une vue en demi-coupe axiale d'une disposition de spires d'un conduit à section constante selon l'invention,
la figure 6 est une vue en demi-coupe axiale d'une disposition de spires d'un conduit à section variable selon l'invention,
la figure 7 est une vue en perspective d'un réservoir conformément à un deuxième mode de réalisation selon l'invention,
la figure 8 est une vue en perspective d'un réservoir conformément à un troisième mode de réalisation selon l'invention,
la figure 9 est une vue en perspective en coupe partielle d'un réservoir conformément à un quatrième mode de réalisation selon la présente invention,
la figure 10 est une vue en coupe montrant la section d'un tube, et
la figure 11 est une vue en perspective en coupe partielle d'un réservoir conformément à un cinquième mode de réalisation selon la présente invention.

## DESCRIPTION DETAILLEE DE MODES PARTICULIERS DE RÉALISATION

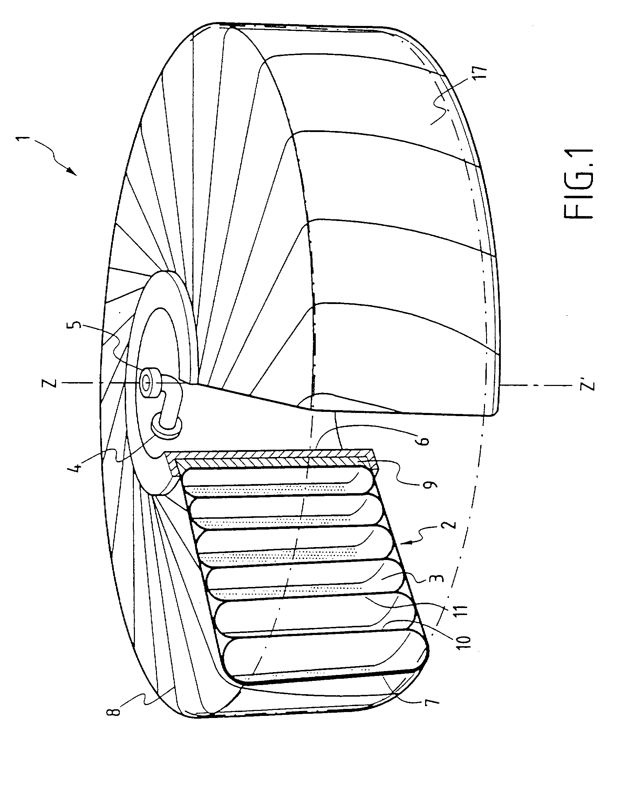

La figure 1 montre un réservoir 1 pour stockage de gaz à haute pression qui comprend un volume de confinement 2 du gaz constitué par un enroulement en spirale autour d'un axe ZZ' d'un conduit 3 métallique, conformément à un premier mode de réalisation de l'invention. Le conduit 3 qui présente une section de forme aplatie ou oblongue est enroulé en une pluralité de spires adjacentes pour permettre à celles-ci d'être en appui les unes sur les autres au niveau de leurs portions allongées sensiblement rectilignes 10, 11 à l'exception de la spire la plus interne et de la spire la plus externe qui ne comportent qu'une portion rectiligne en appui sur la spire adjacente.

Un tel enroulement à spires jointives d'un conduit à section aplatie permet d'atteindre les buts recherchés par l'invention, c'est-à-dire notamment de réduire la masse, l'encombrement et le coût du réservoir par rapport à une même quantité de gaz qui serait stockée dans un réservoir conventionnel.

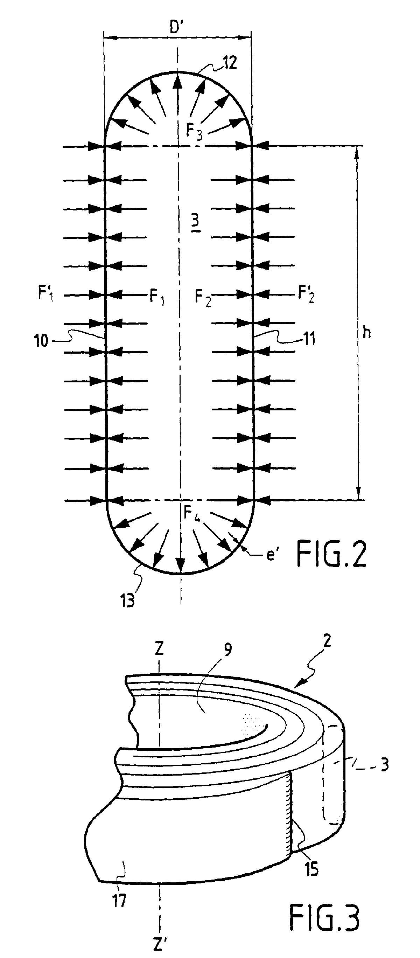

La figure 2 représente une section du conduit 3 qui comprend deux portions allongées rectilignes 10, 11 raccordées entre elles par des portions curvilignes 12, 13. Les efforts exercés par la pression du gaz sur les portions allongées 10, 11 sont représentés respectivement par une série de flèches $F_1$ et $F_2$ sur une zone de neutralisation h. Les efforts exercés sur la paroi extérieure du conduit par les spires adjacentes sont représentés par une série de flèches $F_1'$ et $F_2'$ sur la zone h. On constate que les efforts radiaux $F_1$, $F_2$ exercés par la pression du gaz dans le conduit respectivement sur les portions rectilignes 10 et 11 sont compensés respectivement par les efforts radiaux $F_1'$ et $F_2'$ exercés sur des portions correspondantes de spires adjacentes. De cette façon, on peut considérer que les efforts de pression du gaz ne sollicitent que les parties curvilignes 12, 13 soumises respectivement aux efforts axiaux $F_3$ et $F_4$. L'épaisseur de la paroi du conduit peut être réduite en proportion de la compensation. Le dimensionnement mécanique à la pression du conduit 3 se résume alors à celui d'un tube de diamètre D' constitué par la réunion des deux portions curvilignes 12, 13. Dans certains cas, selon le matériau du conduit et la pression du gaz stockée, l'épaisseur de paroi du conduit peut être plus importante pour les portions curvilignes 12, 13 que pour les portions rectilignes 10, 11.

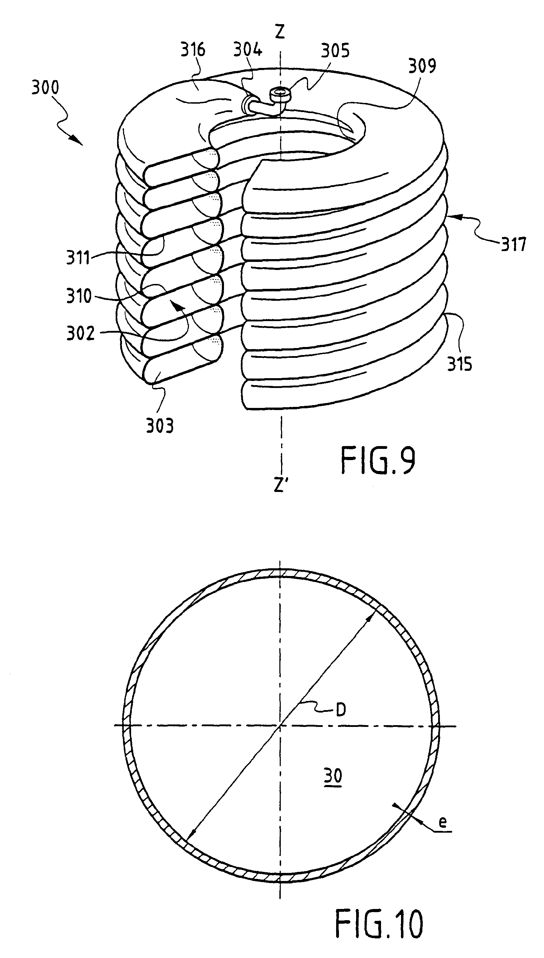

La figure 10 montre une section d'un tube 30 destinée à contenir du gaz à une pression donnée. Cette section présente un diamètre D et une épaisseur de paroi e. La relation entre le diamètre D et l'épaisseur e du tube, pour un matériau et une pression de gaz donnés, est du type $\frac{e}{D}$ = constante. En conséquence, si le diamètre D de la section peut être réduit, la relation $\frac{e}{D}$ = constante permet de déduire que l'épaisseur e sera également proportionnellement réduite. Par conséquent, à titre d'exemple, un diamètre de section D' = $\frac{D}{2}$ réduit de moitié autorise une réduction équivalente de l'épaisseur e' = $\frac{e}{2}$ de la paroi du réservoir. La mise en forme du conduit selon l'invention peut être obtenue notamment par "l'aplatissement" du tube 30 de diamètre D de telle sorte qu'il présente, comme illustré sur la figure 2, une forme oblongue avec deux portions curvilignes 12, 13 de diamètre D' = $\frac{D}{2}$ qui peuvent alors avoir une épaisseur e' = $\frac{e}{2}$ tout en satisfaisant aux mêmes besoins en pression que le tube 30.

Dans ce cas, le gain de masse par unité de longueur est de 50%. Il faut toutefois noter que la section déformée du conduit 3 est plus faible que celle du tube 30 d'origine. Dans l'exemple ci-dessus, il convient alors d'augmenter la longueur de 33% pour retrouver le même volume. Le gain effectif en masse s'établit donc au final à 33% et porte l'indice de structure du réservoir selon l'invention au-delà de 1,5 l/kg.

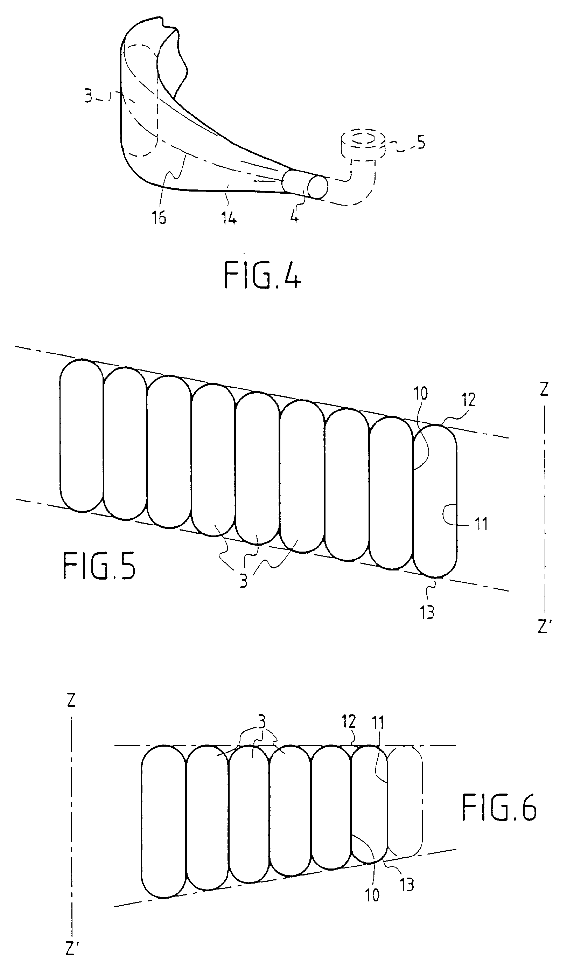

Le procédé de fabrication et le réservoir selon l'invention vont maintenant être décrits conformément à un premier mode de réalisation en relation avec les figures 1 à 4. Le conduit 3 à section oblongue peut être obtenu soit de manière économique par repliage et soudage d'une bande métallique, soit par étirement d'un tube unique sans soudure. Une extrémité 16 du conduit 3 ainsi obtenu est profilée par chaudronnage pour présenter, comme illustré sur la figure 4, une forme de goulot de rétrécissement 14 cylindro-conique qui reçoit un élément de raccordement 4 et un élément de communication 5. L'élément de communication 5 peut comprendre une vanne, un piston ou tout élément permettant une ouverture/fermeture sélective du réservoir pour l'alimentation et le remplissage. La figure 3 montre l'autre extrémité 15 du conduit 3 qui est également profilée pour être amincie progressivement jusqu'à un pincement qui est fermé par soudage.

L'opération suivante consiste à cintrer le conduit 3 selon un enroulement en spirale qui commence avec l'extrémité 16 et qui se termine avec l'autre extrémité 15. Cette opération de cintrage peut être réalisée sur une machine à commande numérique avec, selon les caractéristiques du profil du conduit 3, soit une application d'une pression déterminée à l'intérieur du conduit 3, soit un préchauffage de celui-ci ou encore une combinaison des deux. L'ébauche d'enroulement est alors provisoirement cerclée pour subir un cycle de traitement thermique approprié. L'enroulement en spirale du conduit 3 est donc figé dans sa forme définitive et il convient maintenant de le renforcer au niveau de sa surface extérieure 17 pour conserver la cohérence et la fiabilité de la structure d'enroulement lorsque le conduit sera en pression. Les spires du conduit 3 en appui les unes sur les autres à l'issue de la mise en forme selon l'enroulement peuvent, de façon optionnelle, comprendre un matériau intercalé entre chaque spire afin de réduire les forces de frottement entre deux portions allongées rectilignes 10, 11 ou 11, 10 de deux spires adjacentes.

La surface cylindrique externe 17 définie par la spire la plus extérieure de l'enroulement est cerclée par un bobinage avec une fibre de carbone ou de verre pour former une frette extérieure 7 entourant l'enroulement. On procède ensuite à la mise en place d'une frette intérieure 6 sur la surface cylindrique interne 9 de l'enroulement. La frette intérieure 6 comprend un anneau métallique empoté à l'aide d'une résine de type époxy. Un bobinage 8 éventuel de protection en fibre de verre peut être réalisé tout autour de l'anneau formé par l'enroulement pour protéger celui-ci contre les chocs et les agressions chimiques.

Après cuisson du composite, l'ensemble est soumis à une opération d'autofrettage destinée à mettre en tension la frette extérieure 7 et en compression le conduit métallique 3 en l'absence de pression de gaz.

Une opération de test hydraulique est en dernier lieu effectuée conformément aux réglementations en vigueur selon la destination d'utilisation du réservoir.

Le réservoir 1 ainsi obtenu présente, par exemple, pour une capacité de stockage de 100 litres et un enroulement de 7,5 spires un diamètre hors tout de 950 mm pour une hauteur hors tout de 190 mm.

Diverses variantes de réalisation sont possibles. Par exemple, la frette extérieure 7 pourrait être réalisée à l'aide d'un matériau métallique.

Le réservoir illustré en figure 1 présente une forme en galette. Cette géométrie confère au réservoir une grande capacité d'intégration dans des structures, comme par exemple des petits ou gros véhicules automobiles, qui requièrent une optimisation de l'encombrement et de la masse de ce type d'éléments.

Néanmoins, une grande variété de formes du réservoir peuvent être obtenues tout en conservant les propriétés de conception optimisée d'un réservoir selon l'invention (spires jointives d'un tube de section aplatie).

Les figures 5 et 6 montrent, par exemple, qu'en jouant sur une légère dissymétrie de la section du conduit 3, on peut faire varier la forme d'enveloppe du réservoir. La figure 5 montre une forme en coupe du réservoir où le conduit à section constante est décalé en hauteur au fur et à mesure que les spires s'éloignent du centre de l'enroulement. La figure 6 montre une forme en coupe du réservoir également ascendante vers l'extérieur pour sa partie inférieure mais plate pour sa partie supérieure grâce à un conduit 3 à section variable. Avec de telles caractéristiques de formes, le réservoir présente alors une ou deux parois frontales sensiblement tronconiques plutôt que sensiblement planes et parallèles avec des configurations de conduit à dimensions fixes sans dissymétrie. Ces deux variantes de formes présentent des avantages supplémentaires pour l'aménagement ou l'utilisation, comme notamment la possibilité d'avoir un point bas dans le réservoir, au voisinage duquel peuvent être placés les moyens de raccordement et de communication 4, 5.

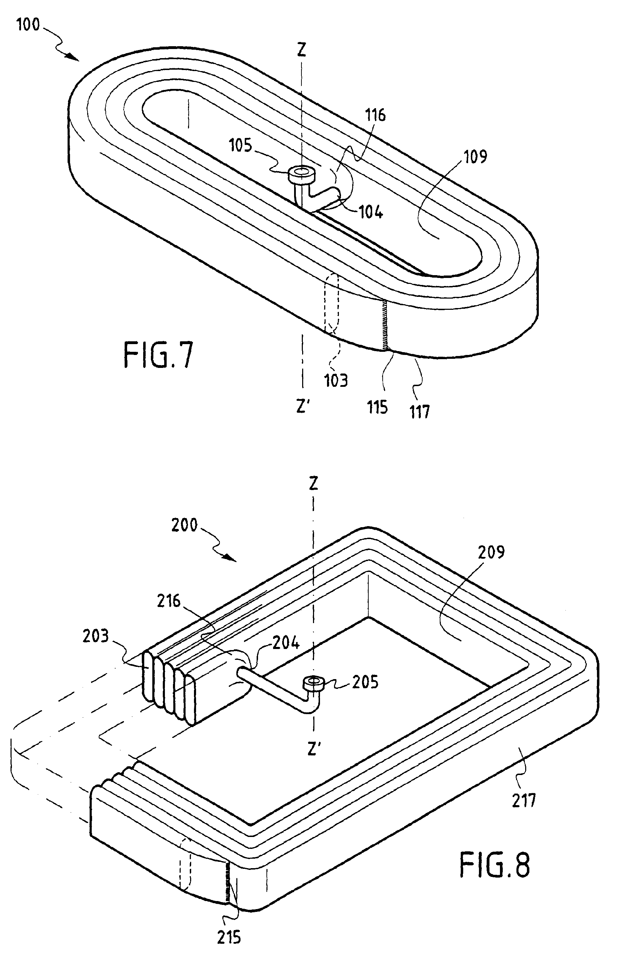

Comme autres exemples de variantes de forme d'un réservoir selon l'invention, les figures 7, 8 et 9 montrent respectivement un deuxième 100, troisième 200 et quatrième 300 modes de réalisation de l'invention dont deux variantes de forme d'enroulement en spirale ainsi qu'une variante d'enroulement de type hélicoïdale. On notera que tous les éléments des deuxième, troisième et quatrième modes de réalisation référencés sur les figures 7, 8 et 9 sont équivalents en forme et en fonction à ceux du premier mode de réalisation du réservoir 1 selon l'invention et ne seront donc pas décrits en détail. De plus, les figures 7, 8 et 9 représentent respectivement les deuxième, troisième et quatrième modes de réalisation sous une forme mise à nu d'un réservoir selon l'invention, c'est-à-dire sans les frettages et les bobinages décrits en relation avec la figure 1. L'homme de l'art concevra sans difficultés supplémentaires que ces modes de réalisation peuvent évidemment inclure ces éléments par la mise en oeuvre du procédé de fabrication précédemment décrit.

Dans toutes ces formes de réalisation, l'élément de raccordement 4 et celui de communication 5 sont disposés dans le volume cylindrique interne défini par la surface interne 9 de l'enroulement. Cette disposition, qui n'est pas unique, évite d'avoir les moyens de raccordement en saillie du réservoir. La figure 7 représente un réservoir 100 qui est formé selon un enroulement en spirale conformément au procédé de fabrication précédemment décrit en relation avec la figure 1, mais qui présente au final une forme ovale obtenue par des réglages déterminés lors du cintrage du conduit. De même, par des paramètres de cintrage différents et éventuellement par un redimensionnement du conduit, un réservoir 200 selon l'invention peut présenter une forme allongée rectangulaire comme illustrée en figure 8.

La figure 9 montre un quatrième mode de réalisation d'un réservoir 300 selon l'invention qui diffère des modes de réalisation précédents, non seulement dans sa forme mais aussi dans la construction de l'enroulement du conduit autour de l'axe ZZ'. En effet, dans les modes de réalisation décrits en relation avec les figures 1, 7 et 8, le conduit est enroulé autour de l'axe ZZ' selon une spirale avec les parties allongées 10, 11 des spires adjacentes parallèles à l'axe ZZ'. Ceci a pour effet de lover le conduit sur lui-même et le nombre de spires de l'enroulement détermine le diamètre ou la dimension transversale du réservoir obtenu. De façon différente, le réservoir 300 représenté en figure 9 comprend un conduit 303 également à section oblongue, qui est enroulé autour d'un axe ZZ' selon une disposition hélicoïdale. Dans cette configuration de construction, l'enroulement des spires commence par une extrémité 315, par exemple, rétrécie, pincée et soudée et s'épaissit en hauteur par rapport à l'axe ZZ' jusqu'à l'autre extrémité 316 équipée de moyens de raccordement et de communication 304, 305. Dans ce mode de réalisation, l'ensemble des spires juxtaposées définit la dimension longitudinale du réservoir, selon l'axe ZZ'.

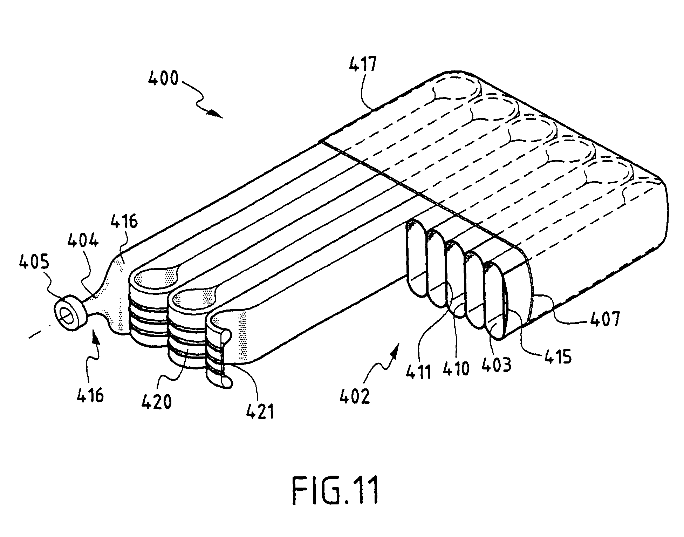

Un cinquième mode de réalisation d'un réservoir selon l'invention est représenté en figure 11. Dans ce mode de réalisation, le réservoir 400 est formé par pliage d'un conduit 403 en une pluralité de parties jointives selon un serpentin en lacets qui présente des parties coudées 420. Cette disposition du conduit 403 unique permet d'obtenir les effets recherchés par l'invention. En effet, les portions allongées 410, 411 d'une partie jointive se trouvent bien en appui sur les portions allongées correspondantes des parties jointives adjacentes du conduit à l'exception des portions d'extrémités 416, 415 qui peuvent comporter respectivement soit les moyens de raccordement 404, 405 d'un côté et un profil rétréci de fermeture du conduit de l'autre côté soit les moyens de raccordement des deux côtés. L'extrémité 415 est ici représentée par un profilé d'extrémité compensateur en forme de demi-aile comprenant des renforts intérieurs. Un bobinage 407 sur toute la surface latérale du réservoir 400 est prévu pour bloquer les déplacements, sous l'effet de la pression du gaz, des portions jointives pliées. Les parties coudées 420 peuvent être profilées et renforcées par un ou plusieurs cordons de soudure 421 sur toute la périphérie interne ou externe du coude. Ceci permet alors d'obtenir, d'une part, un cintrage court de 180° du conduit 403 tout en conservant au réservoir une perte de charge compatible avec un remplissage rapide, et d'autre part un contrôle des déformations sous pressions grâce notamment à la présence des cordons de soudure 421.

Tous les modes de réalisation précédemment décrits peuvent évidemment être combinés avec une disposition particulière du conduit (dissymétrie) ou avec un dimensionnement variable de sa section comme expliqué en relation avec le premier mode de réalisation décrit. Les formes du réservoir ainsi obtenues sont fonction du mode de disposition du conduit choisi selon l'invention et des paramètres de disposition et de dimensions du conduit. L'homme de l'art pourra ainsi sans difficultés envisager toute forme de réalisation pour des réservoirs selon l'invention.

Le cinquième mode de réalisation illustré sur la figure 11 permet en particulier d'obtenir des formes de réservoir parallélépipédiques compactes sans espace libre au centre du réservoir.

Les réservoirs selon l'invention sont bien adaptés au stockage de gaz à des pressions pouvant être, par exemple, de l'ordre de 200 bar ou même supérieures à cette valeur. De tels réservoirs peuvent être de masse réduite, notamment s'ils sont réalisés en un matériau tel que l'aluminium.

Dans le cas d'une intégration du réservoir selon l'invention dans un véhicule, on notera qu'au plan de la sécurité, de par la géométrie qui réalise un pseudo cloisonnement, les effets d'une dépressurisation brutale, consécutive à un choc par exemple, seront modérés du fait de l'inertie de la masse stockée. On notera également une grande capacité d'absorption des chocs dans un plan contenant la plus grande dimension du réservoir (plan perpendiculaire à l'axe ZZ' des modes de réalisation des figures 1, 7 et 8, plan axial contenant l'axe ZZ' pour le mode de réalisation de la figure 9 et plan latéral pour le mode de réalisation de la figure 11), le réservoir se présentant alors comme une structure "sandwich" élastique placée dans un véhicule de façon à pouvoir absorber la plupart des chocs dans ce type d'utilisation, c'est-à-dire les chocs latéraux.

**Revendications**

1.  Réservoir (1) pour stockage de gaz à haute pression comprenant un volume de confinement (2) en communication sélective avec l'extérieur par des moyens de raccordement (4, 5), caractérisé en ce que ledit volume de confinement (2) comprend un conduit (3) présentant une section oblongue formée d'une première et d'une deuxième portions allongées (10, 11) raccordées entre elles par des troisième et quatrième portions curvilignes (12, 13) et en ce que ledit conduit (3) est disposé en une pluralité de parties jointives de manière à permettre un appui d'au moins une des portions allongées (10, 11) d'une partie jointive sur une des portions allongées (11, 10) correspondante d'une partie jointive adjacente de ladite pluralité de parties jointives.

2.  Réservoir selon la revendication 1, caractérisé en ce que le conduit (3) présente une section de dimensions variables.

3.  Réservoir selon l'une quelconque des revendications 1 et 2, caractérisé en ce que le conduit (3; 103; 203) est disposé selon un enroulement en spirale autour d'un axe ZZ' à partir d'une extrémité interne (16; 116, 216) dudit conduit comportant les moyens de raccordement (4; 104; 204, 5; 105; 205) jusqu'à une extrémité externe fermée (15; 115; 215) de fin dudit conduit.

4.  Réservoir selon l'une quelconque des revendications 1 à 3, caractérisé en ce que le réservoir (1) présente une forme de galette.

5.  Réservoir selon l'une quelconque des revendications 1 à 3, caractérisé en ce que le réservoir (200) présente une forme rectangulaire.

6.  Réservoir selon l'une quelconque des revendications 1 à 5, caractérisé en ce que ledit réservoir définit des parois frontales sensiblement planes et parallèles.

7.  Réservoir selon l'une quelconque des revendications 1 à 5, caractérisé en ce que ledit réservoir définit au moins une paroi frontale sensiblement tronconique.

8.  Réservoir (300) selon l'une quelconque des revendications 1 et 2, caractérisé en ce que le conduit (303) est disposé selon un enroulement hélicoïdal autour d'un axe ZZ' à partir d'une première extrémité (315) fermée jusqu'à une seconde extrémité (316) comportant les moyens de raccordement (304, 305).

9.  Réservoir (1; 100; 200; 300) selon l'une quelconque des revendications 1 à 8, caractérisé en ce qu'une surface interne (9; 109; 209; 309) du réservoir définie par l'enroulement du conduit (3; 103; 203; 303) comprend une frette intérieure (6).

10. Réservoir (1; 100; 200; 300) selon l'une quelconque des revendications 1 à 9, caractérisé en ce qu'une surface externe (17; 117; 217; 317) du réservoir définie par l'enroulement du conduit (3; 103; 203; 303) comprend une frette extérieure (7).

11. Réservoir (400) selon l'une quelconque des revendications 1 et 2, caractérisé en ce que le conduit (403) est disposé selon un serpentin en lacets à partir d'une première extrémité (416) comportant les moyens de raccordement (404, 405) jusqu'à une seconde extrémité (415).

12. Réservoir (400) selon la revendication 11, caractérisé en ce que la seconde extrémité (415) est fermée.

13. Réservoir (400) selon la revendication 11, caractérisé en ce que la seconde extrémité comprend également des moyens de raccordement.

14. Réservoir (400) selon l'une quelconque des revendications 11 à 13, caractérisé en ce que le conduit (403) présente des parties coudées (420) dans lesquelles il est pratiqué au moins un cordon de soudure (421).

15. Réservoir (400) selon l'une quelconque des revendications 11 à 14, caractérisé en ce qu'il comprend un bobinage (407) qui entoure latéralement le serpentin en lacets formé par le conduit (403).

16. Réservoir (400) selon l'une quelconque des revendications 11 à 15, caractérisé en ce que le réservoir présente une forme parallélépipédique.

17. Réservoir selon l'une quelconque des revendications 1 à 16, caractérisé en ce que les troisième et quatrième portions curvilignes (12, 13) sont des demi-cercles.

18. Réservoir selon l'une quelconque des revendications 1 à 17, caractérisé en ce que lesdites portions allongées (10, 11) sont sensiblement rectilignes.

19. Procédé de fabrication d'un réservoir pour stockage de gaz à haute pression, caractérisé en ce qu'il comprend les étapes suivantes :

   (a) cintrage d'un conduit (3) de section oblongue en une pluralité de parties jointives de manière à permettre à au moins une portion allongée (10,11) d'une partie jointive dudit conduit d'être en appui sur une portion allongée (11, 10) d'une partie jointive adjacente ;
   (b) traitement thermique dudit conduit provisoirement cerclé ; et
   (c) bobinage (7) de la surface externe (17) du conduit au moyen d'une fibre de carbone ou de verre.

20. Procédé selon la revendication 19, caractérisé en ce qu'il comprend en outre une étape de fermeture d'une première extrémité (15) dudit conduit et une étape de fixation de moyens de communication (4, 5) sur une seconde extrémité (16) dudit conduit.

21. Procédé selon l'une quelconque des revendications 19 et 20, caractérisé en ce qu'il comprend une étape de formation dudit conduit (3) à section oblongue au moyen d'une bande métallique refermée par soudage axial.

22. Procédé selon l'une quelconque des revendications 19 à 21, caractérisé en ce que l'opération (a) de cintrage du conduit (3) comprend en outre l'application d'une pression intérieure audit conduit et/ou d'un préchauffage dudit conduit.

23. Procédé selon l'une quelconque des revendications 19 à 22, caractérisé en ce que l'étape (a) de cintrage correspond à un enroulement du conduit (3, 103, 203, 303) autour d'un axe ZZ' et en ce qu'il comprend, en outre, une étape (d) d'introduction d'une frette intérieure (6) sur la surface interne définie par ledit enroulement.

24. Procédé selon l'une quelconque des revendications 19 à 22, caractérisé en ce que l'étape (a) de cintrage correspond à un pliage en serpentin du conduit (403) et en ce qu'il comprend, en outre, une étape (d') de soudage dans des parties coudées du conduit (403) disposé en serpentin.

25. Procédé selon l'une quelconque des revendications 19 à 24, caractérisé en ce qu'il comprend, en outre, une étape (e) de serrage du bobinage externe (7).

26. Procédé selon l'une quelconque des revendications 19 à 25, caractérisé en ce qu'il comprend, en outre, une étape (f) de bobinage du réservoir au moyen d'une fibre de verre.

FIG.1

FIG.2

FIG.3

FIG.4

FIG.5

FIG.6

100

Z

116

105

109

104

## FIG.7

Z'

103

115    117

Z

200

209

216

203    204

205

217

Z'

215

## FIG.8

FIG.9

FIG.10

FIG.11

**Office européen des brevets**

## RAPPORT DE RECHERCHE EUROPEENNE

Numéro de la demande

EP 00 40 3513

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | WO 99 19203 A (ENRON LNG DEV CORP) 22 avril 1999 (1999-04-22) * page 1, ligne 24 - page 2, ligne 6; revendications; figures * * page 2, ligne 16 - ligne 23 * * page 4, ligne 15 - ligne 18 * --- | 1-18 | F17C1/00 |
| A | DE 23 05 840 A (WANKEL FELIX DR ING H C) 8 août 1974 (1974-08-08) * page 4, alinéa 2; revendications; figures * * page 5, ligne 3 * --- | 1-18 | |
| A | US 4 576 015 A (CRAWFORD A GERRIT) 18 mars 1986 (1986-03-18) * le document en entier * --- | 1-18 | |
| A | FR 2 739 912 A (SARDOU MAX) 18 avril 1997 (1997-04-18) * le document en entier * ----- | 1-18 | |

**DOMAINES TECHNIQUES RECHERCHES (Int.Cl.7)**

F17C

Le présent rapport a été établi pour toutes les revendications

| Lieu de la recherche | Date d'achèvement de la recherche | Examinateur |
|---|---|---|
| LA HAYE | 27 mars 2001 | Lapeyrere, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**                    EP 00 40 3513

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-03-2001

| Document brevet cité au rapport de recherche | Date de publication | Membre(s) de la famille de brevet(s) | Date de publication |
|---|---|---|---|
| WO 9919203      A | 22-04-1999 | AU      4745697 A | 03-05-1999 |
| DE 2305840      A | 08-08-1974 | AUCUN | |
| US 4576015      A | 18-03-1986 | AUCUN | |
| FR 2739912      A | 18-04-1997 | AUCUN | |

EPO FORM P0460

Pour tout renseignement concernant cette annexe : voir Journal Officiel de l'Office européen des brevets, No.12/82